# EUROPÄISCHE PATENTSCHRIFT

(11) **EP 0 210 617 B1**
(45) Veröffentlichungstag und Bekanntmachung des Hinweises auf die Patenterteilung: **20.04.1994**
(21) Anmeldenummer: 86110337.2
(22) Anmeldetag: 26.07.1986
(51) Int. Cl.: G01N 15/08

(54) **Verfahren und Vorrichtung zum Messen der Luftdurchlässigkeit**
Method and apparatus for measuring permeability to air
Méthode et dispositif pour mesurer la perméabilité à l'air

(30) Priorität: 02.08.1985 DE 3527838
(43) Veröffentlichungstag der Anmeldung: 04.02.1987
(73) Patentinhaber: Westerteiger, Willi, D-56333 Winningen (DE)
(72) Erfinder: Westerteiger, Willi, D-56333 Winningen (DE)

(56) Entgegenhaltungen:
- DE-B- 1 063 832
- US-A- 3 466 925
- US-A- 3 477 288

## Beschreibung

Die Erfindung betrifft ein Verfahren und eine Vorrichtung zum Messen der Luftdurchlässigkeit von bahnförmigen Materialien, insbesondere Vliesstoffen und Papier, wobei die Vorrichtung im wesentlichen aus einer Einspannvorrichtung für eine Probe des zu prüfenden Materiales, einem auf einer Seite der Einspannvorrichtung angeordneten Luftstromerzeuger und einer auf der gegenüberliegenden Seite der Einspannvorrichtung angeordneten Messvorrichtung besteht, der eine Auswerteeinrichtung zugeordnet ist.

Das Prüfen der Luftdurchlässigkeit von Flächengebilden erfolgt im Normalfall nach DIN 53887. Dazu werden Prüfgeräte eingesetzt, die aus einer Einspannvorrichtung, einem Sauglüfter, Luftströmungsmesser oder Luftmengenmesser nebst Stoppuhr, Regeleinrichtung und Unterdruckmesser bestehen. Die Einspannvorrichtung weist dabei meist eine kreisförmige Prüffläche von 20 cm² auf. Bei verschiedenen Fabrikaten ist die Größe der Prüffläche wählbar und kann zusätzlich 10, 50 oder 100 cm² betragen. Der Sauglüfter muß bei eingespanne Probe einen Unterdruck von 20 mm Wassersäule erzeugen. Der Luftströmungsmesser oder der Luftmengenmesser muß die Messung des Luftstromes oder der durch den Stoff hindurchgesaugten Luftmenge auf ein Liter genau gestatten. Die Regeleinrichtung muß den Unterdruck genau regeln können, so daß er während der Prüfung konstant gehalten werden kann, der Unterdruckmesse einen Messbereich von 0 bis 20 mm Wassersäule aufweisen und eine Skalenteilung von 0,5 mm Wassersäule oder feiner besitzen.

Die Prüfung erfolgt bei diesen bekannten Geräten so, daß das Probestück bei geschlossenem Regelventil in die Einspannvorrichtung eingelegt und nach Glattstrecken festgespannt wird. Danach wird der geforderte Unterdruck eingestellt. Bei Verwendung von Durchflussmessern mit Schwebekörpern kann dann sofort nach Einstellung des Unterdruckes der hindurchgesaugte Luftstrom abgelesen werden. Werden Gasmengenzähler eingesetzt, beträgt die Versuchsdauer für den Einzelversuch je nach Durchgangsmenge 1 bis 10 Minuten.

Der Stand der Technik erfordert also für die Prüfung der Luftdurchlässigkeit von Flächengebilden recht aufwendige Apparaturen und benötigt für die Prüfung einen relativ hohen Zeitaufwand, so daß es in der Praxis nicht möglich ist, an beliebigen Orten mit einem transportablen kleinen Handgerät sofort eine Aussage über die Luftdurchlässigkeit eines Flächengebildes zu machen.

Der Erfindung liegt daher die Aufgabe zugrunde, ein Verfahren aufzuzeigen, mit dem sich die Messung schneller durchführen läßt und gleichzeitig eine Vorrichtung zu schaffen, die nicht nur klein und handlich, sondern einfacher aufgebaut und damit auch preisgünstiger zu fertigen ist.

Diese Aufgabe wird durch ein Verfahren zum Messen der Luftdurchlässigkeit von bahnförmigen Materialien gemäß Anspruch 1 gelöst.

Eine Vorrichtung zur Durchführung des Verfahrens ist definiert in Anspruch 4.

Eine alternative Ausgestaltung der Erfindung ist definiert in Anspruch 5.

Der grundlegende Unterschied der vorliegenden Erfindung zum Stande der Technik besteht darin, daß die Luftdurchlässigkeit nicht mittels eines durch die Probe hindurchgehenden Luftstromes, dessen Mengen oder Druckverlust gemessen wird, ermittelt wird, sondern es wird ein pulsierender Luftstrom erzeugt, wozu weder Überdruck noch Vakuum erforderlich ist. Dieser pulsierende Luftstrom passiert die Probe in beiden Richtungen entsprechend der Bewegung der die Frequenzen erzeugenden Membran. Durch das Passieren der Probe wird im angrenzenden Raum die Luft ebenfalls in Schwingungen versetzt, so daß eine zweite Membran Schwingungen erhält, die wiederum in elektrische Impulse umgesetzt und über eine Anzeigevorrichtung sichtbar gemacht werden.

Die Frequenz der Schwingungen liegt erfindungsgemäß zwischen 20 und 8.000 Hertz, also im Bereich der hörbaren Frequenzen, wobei oberhalb 8.000 Hertz die Schwingung so hoch ist, daß praktisch kein Luftaustausch zwischen den beiden durch die Probe getrennten Räumen mehr stattfindet und unterhalb 20 Hertz eine zu große Beeinflussung durch Umwelteinflüsse auf die Schwingungen ausgeübt wird, d.h., daß diese Frequenzen leicht durch andere Frequenzen überlagert werden, was zu einem verfälschten Messergebnis führt.

Bei Frequenzen oberhalb 400 Hertz verringert sich bei einfachen Anzeigeinstrumenten der Ausschlag des Instrumentes, so daß die Ablesegenauigkeit reduziert ist. Gemäß einer bevorzugten Ausgestaltung der Erfindung erfolgt daher die Beschallung mit 20 bis 400 Hertz. Zu beachten bei der Wahl des Frequenzbereichs ist die von der Gehäusekonstruktion abhängige Resonanzfrequenz, die zu Messbereichsverschiebungen führt. Von dieser Ausnahme abgesehen ergeben sich im Bereich zwischen 20 und 400 Hertz keine signifikanten Änderungen der Messergebnisse.

Eine wesentliche Ausgestaltung der Erfindung sieht vor, daß die Probe plan gehalten wird, was zweckmäßig dadurch erfolgt, daß die Gehäuse mit einer Abdeckung aus einem luftdurchlässigen Material, an dem die Probe anliegt, abgedeckt sind. Die Probe kann als solche uner Spannung zwischen die beiden sich gegenüberliegenden Gehäuse gebracht werden, der einfachere Weg ist jedoch, daß sie an den luftdurchlässigen Abdeckungen der Gehäuse anliegt, dadurch plan gehalten wird und vor allen Dingen selbst nicht schwingt. Ein Schwingen der Probe führt zu einer Verzerrung der Meßwerte, sie wird deshalb zweckmäßig zwischen den beiden Abdeckungen eingespannt.

Die Abdeckungen können dabei vorteilhaft aus gespannten Sieben bestehen, bevorzugt wegen der höheren Stabilität ist jedoch ein Lochblech, wobei der Begriff Blech bezüglich des Materials nicht auf Metalle beschränkt sein soll, sondern sehr weit auslegungsfähig ist. So lassen sich beispielsweise mit bestem Erfolg Kunstoffe, wie PTFE, für die Abdeckung einsetzen.

Größere Bedeutung kommt auch der Ausgestaltung der Bohrungen zu, die gemäß bevorzugten Ausgestaltungen der Erfindung einen Durchmesser zwischen 1 und 10 mm, insbesondere einen solchen zwischen 3 und 7 mm, aufweisen.

Unterhalb eines Durchmessers von 1 mm wird, insbesondere, wenn relativ starkwandige Lochbleche als Abdeckung eingesetzt werden, der Luftdurchgang durch Strömungsverluste erheblich behindert bzw. durch den Prüfling verschlossen, wodurch die Anzeigegenauigkeit des Gerätes leidet. Oberhalb 10 mm besteht aber insbesondere beim Prüfen von sehr dünnen Materialien die Gefahr, daß die angelegte Frequenz zur Schwingung der Probe im Beeich der Bohrung führt, was das Messergebnis ebenfalls verfälscht. Die Bohrungen weisen deshalb zweckmäßig einen Durchmesser von 3 bis 7 mm auf.

Statt der Verwendung von Lochblechen für die Abdeckung sieht eine weitere zweckmäßige Ausgestaltung der Erfindung vor, Schlitzbleche einzusetzen. Auch bei dem Begriff Schlitzblech ist analog wie bei dem Begriff Lochblech die Materialwahl nich auf Metalle beschränkt, sondern schließt ebenso Kunststoffe und auch Holzwerkstoffe ein. Wichtig ist in beiden Fällen nur, daß die jeweiligen Öffnungen, also die Bohrungen oder die Schlitze in den sich gegenüberliegenden Abdeckungen fluchten, damit der Luftaustausch von einem Gehäuse zum anderen gewährleistet ist.

Die Breite der Schlitze liegt zweckmäßig zwischen 1 und 4 mm, wobei die Schlitze sowohl parallel als auch unter beliebiger anderer Konfiguration in der Abdeckung verlaufen können. Ebenso ist die Schlitzlänge nicht kritisch, so ist es beispielsweise möglich, die Schlitze in Form eines Fischgrätmusters anzuordnen, wenn die Festigkeit der Abdeckung dadurch nicht beeinträchtigt wird.

Eine wesentliche Ausgestaltung der Erfindung sieht vor, daß die Membrane des Lautsprechers und ggf. auch die Lautsprecherkalotte luftdicht sind, obwohl es auch möglich ist, mit nicht luftdichten Lautsprechermembranen zu arbeiten, werden luftdichte Lautsprechermembranen bevorzugt, da durch sie die Luftbewegung stärker und vor allen Dingen kontrollierter angeregt wird. Bei nicht luftdichten Lautsprechermembranen wird verständlicherweise ein Teil der Luft durch die Membran hindurchgehen, wobei sich dieser Teil entsprechend der Luftdurchlässigkeit der zu prüfenden Materialbahn ändert, d.h., weist die zu prüfende Materialbahn nur eine geringe Durchlässigkeit auf, so geht ein höherer Teil der in Schwingung gesetzten Luft durch die Lautsprechermembran hindurch, ohne daß sie für die Messung zur Verfügung steht, d.h., daß die Ablesegenauigkeit des Gerätes dadurch verringert wird.

Eine weitere vorteilhafte Ausgestaltung der Erfindung sieht vor, daß die Abdeckung eine freie Fläche aufweist, die insgesamt 5 bis 95 % der Prüffläche beträgt. Durch die Wahl der Größe der freien Fläche ist es möglich - insbesondere, wenn bei dem Prüfgerät die Abdeckungen ausgetauscht werden können - das Prüfgerät bestimmten Einsatzbedingungen anzupassen. So dient ein Gerät, das eine Freifläche aufweist, die im unteren Bereich, also bei 5 % der Prüffläche liegt, dazu, sehr dünne und hochdurchlässige Materialien zu prüfen, im oberen Bereich werden Materialien geprüft, die wesentlich dichter sind. Nicht von Bedeutung ist dabei, welche Form die Freifläche aufweist, d.h. also, ob sie in Form von Bohrungen, Schlitzen oder Maschen ausgestaltet ist. Die Öffnungen müssen sich jedoch fluchtend gegenüber liegen, weil sonst der Luftdurchgang behindert wird und damit keine vergleichbaren Messergebnisse erhalten werden können.

Die Erfindung wird nachstehend anhand der Zeichnungen beschrieben.
- Die Fig. 1 und 2: zeigen schematisch eine Prüfvorrichtung im Schnitt, wobei Fig. 1 eine Ausführungsform während der Prüfung und Fig. 2 eine andere Ausführugsform vor der Prüfung darstellen,
- Fig. 3: eine Draufsicht auf die untere Hälfte der Prüfvorrichtung gemäß Schnitt III-III in Fig. 2
- Fig. 3a: eine Variante von Fig. 3
- Fig. 4: ein mit einem Mikrofon ausgerüstetes Gerät während der Prüfung.

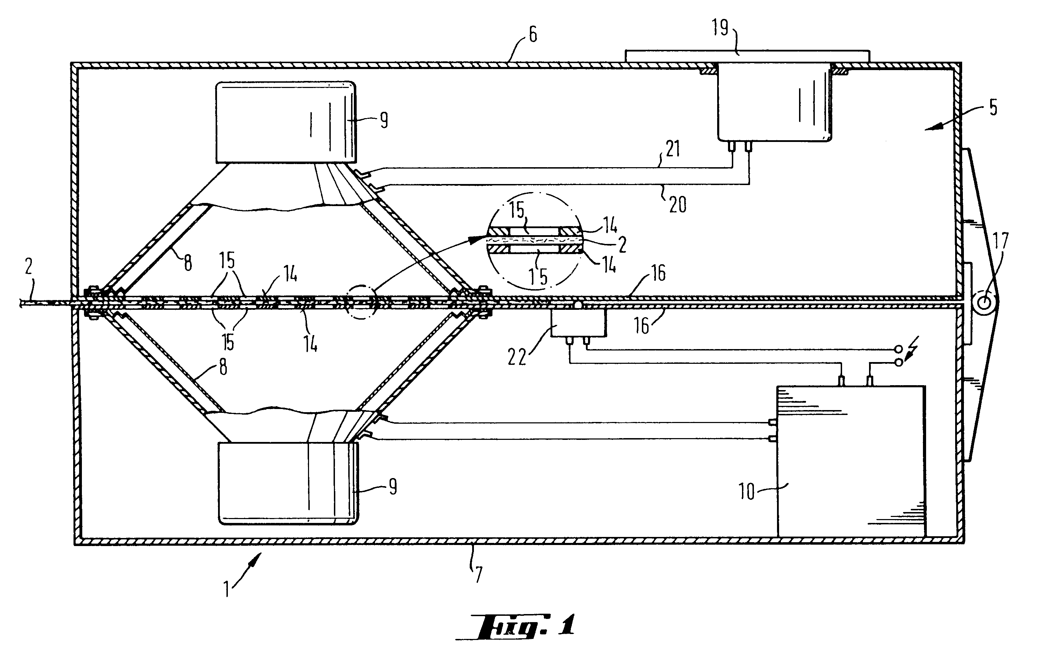

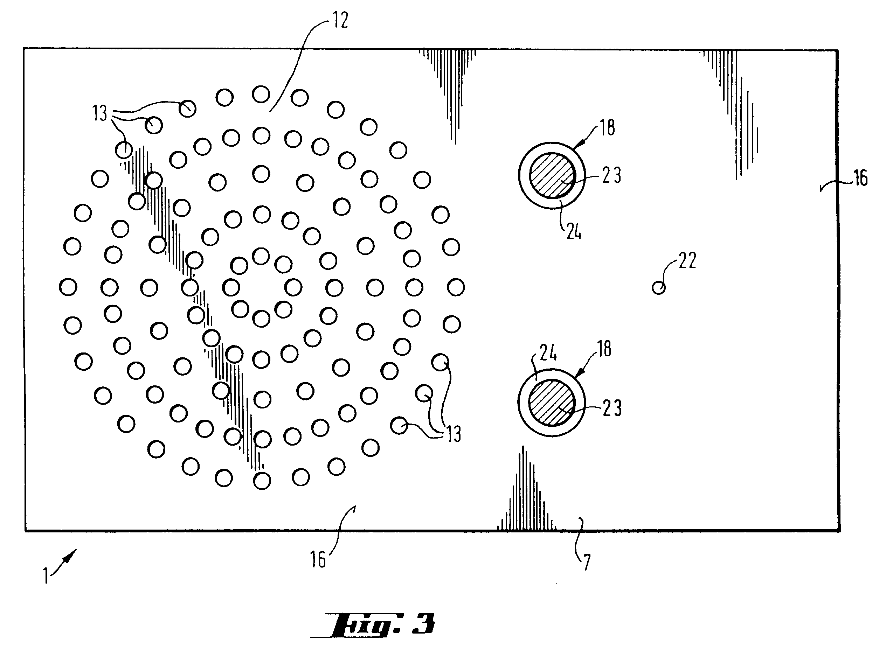

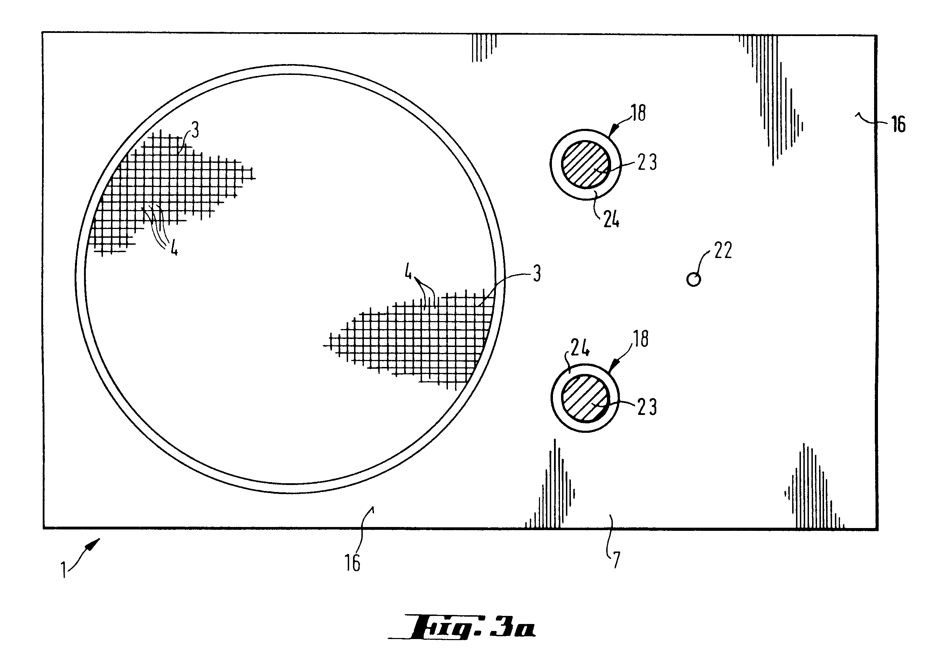

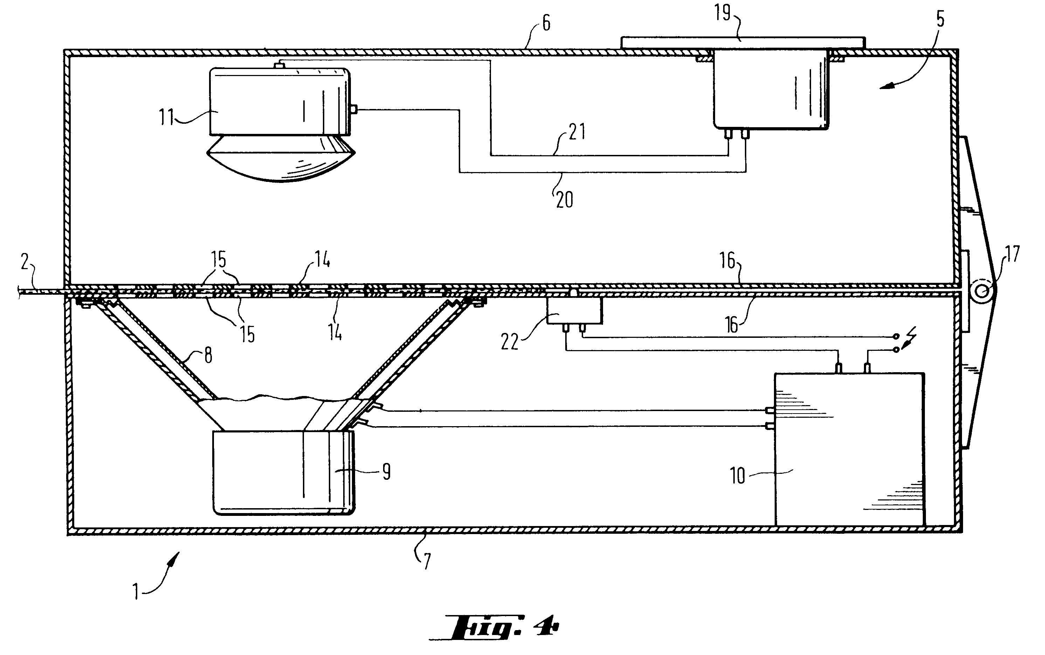

Die Einspannvorrichtung 1 wird durch die Gehäuse 6 und 7 gebildet, die je nach Ausführungsform entweder durch ein Scharnier 17 oder eine Parallelführung 18 miteinander verbunden sind. Das Gehäuse 6, das, wie die Fig. 1 und 4 zeigen, mit einem Schlitzblech 14 abgedeckt ist, enthält das Anzeigegerät 19, das von einem einfachen Drehspulinstrument gebildet wird, wobei dieses Drehpulinstrument anhand bekannter Proben 2 geeicht wurde. Über die Verbindungsleitungen 20, 21 ist das Anzeigegerät 19 mit der Messvorrichtung verbunden, die gemäß Fig. 4 als Mikrofon 11 und gemäß den Fig.1 bis 3 als Lautsprecher 9 ausgeführt ist. Das Gehäuse 7 enthält den Tongenerator 10, der über eine nicht dargestellte Spannungsquelle mit Strom versorgt wird, wenn der Druckschalter 22 durch Zusammendrücken der Gehäuse 6 und 7 betätigt wird. Der dadurch erzeugte Strom bringt die Membrane 8 des als Luftstromerzeuger eingesetzten Lautsprechers 9 zum Schwingen, wodurch Luft durch die Schlitze 15 des Schlitzbleches 14 bzw. die Maschen 4 des Siebes 3 (Fig. 3a), das das Gehäuse 7 abdeckt, hindurchgedrückt wird und die Probe 2, die sich zwischen dem Gehäuse 6 und dem Gehäuse 7 befindet, durchdringt, in das Gehäuse 6 eintritt und hier gemäß Fig. 4 von dem Mikrofon 11 oder gemäß den anderen Fig. von den Lautsprechern 9` aufgefangen und nach Umsetzung in elektrische Energie dem Anzeigegerät 19 zugeführt wird.

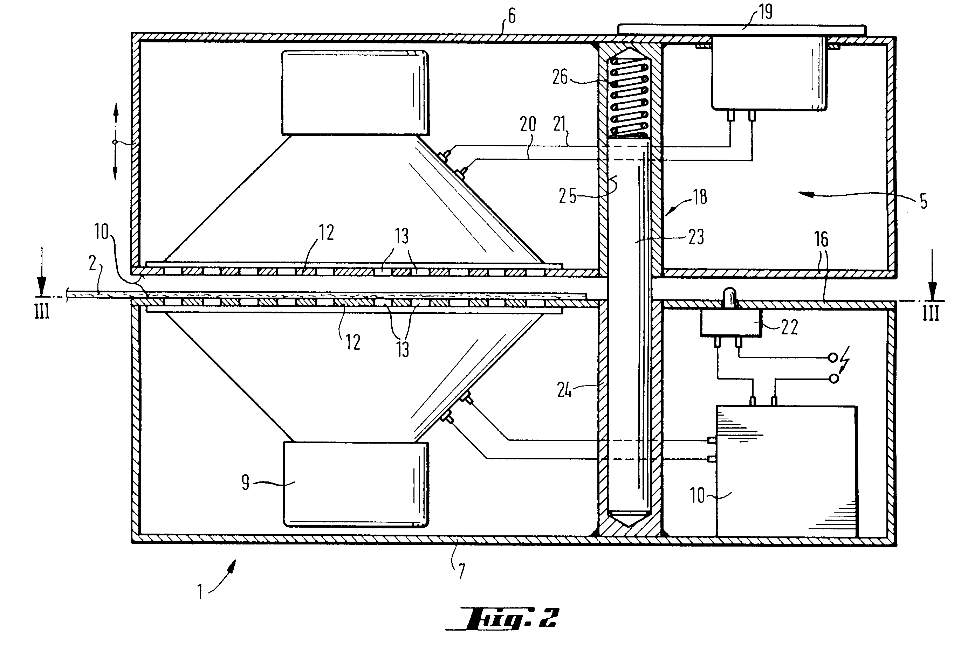

Gemäß Fig. 2 und 3 werden die Gehäuse 6 und 7 nicht durch ein Schlitzblech 14 abgedeckt, sondern sind mit einem Lochblech 12 versehen, das Bohrungen 13 aufweist, durch die die Luft hindurchtreten kann.

Die Bohrungen 13 sind dabei so angeordnet, daß jeder Bohrung 13 in der Abdeckung 16 des Gehäuses 7 eine Bohrung 13 in der Abdeckung 16 des Gehäuses 6 gegenüberliegt, so daß die Luft, die die Bohrungen 13 passiert, nicht durch eine teilweise Überdeckung am Passieren gehindert wird, sondern ohne Beeinträchtigung des freien Querschnitts durch die Probe 2 hindurch zur Auswerteeinrichtung 5, also der Kombination von Anzeigegerät 19 und Mikrofon 11 bzw. Lautsprecher 9 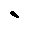 , gelangen kann.

Werden im wesentlichen gleich dicke Materialproben geprüft, so empfiehlt sich wegen des einfacheren Aufbaues der Aggregate die Ausführung mit dem Scharnier 17. Sind jedoch unterschiedliche Materialstärken zu prüfen, so ist die Parallelführung 18 zu bevorzugen, bei der zwei Bolzen 23 in je einem Klemmsitz 24 im Gehäuse 7 gehalten sind. Das obere Gehäuse 6 weist eine Bohrung 25 auf, die mit dem Bolzen 23 eine Gleitpassung bildet und zusätzlich zu dem Bolzen 23 noch Druckfedern 26 aufnimmt, die für das automatische Öffnen des Prüfgerätes sorgen.

## Patentansprüche

1. Verfahren zum Messen der Luftdurchlässigkeit von bahnförmigen Materialien, dadurch gekennzeichnet, daß
(a) eine Probe des zu messenden Materials auf solch eine Weise eingespannt wird, daß sie im wesentlichen nicht schwingen kann;
(b) die Probe mit einer Seite einer Beschallung zwischen 20 und 8000 Hz ausgesetzt wird;
(c) der auf der begenseite austretende Schallpegel aufgefangen wird;
(d) aus dem Schallpegel die Luftdurchlässigkeit der Probe bestimmt wird.

2. Verfahren nach Anspruch 1, dadurch gekennzeichnet, daß die Beschallung mit einer Frequenz zwischen 20 und 400 Hertz erfolgt.

3. Verfahren nach einem der Ansprüche 1 und 2, dadurch gekennzeichnet, daß die Probe plan gehalten wird.

4. Vorrichtung zur Durchführung des Verfahrens nach einem der Ansprüche 1 bis 3, gekennzeichnet durch
(a) eine Einspannvorrichtung für eine Probe des zu prüfenden Materials, die so beschaffen ist, daß die Probe im wesentlichen nicht schwingen kann;
(b) zwei im wesentlichen baugleiche Lautsprecher, von denen ein erster zur Beschallung, und ein zweiter zur Schallpegelmessung vorgesehen ist, die so in zwei sich gegenüberliegende Gehäuse eingebaut sind, daß die jeweiligen Membranen einander zugekehrt sind und die Probe zwischen den Gehäusen angeordnet werden kann;
(c) einen am ersten Lautsprecher angeschlossenen Tongenerator zum Erzeugen einer Frequenz zwischen 20 und 8000 Hz;
(d) eine Auswerteeinrichtung zur Bestimmung der Luftdurchlässigkeit der Probe aus dem gemessenen Schallpegel.

5. Vorrichtung zur Durchführung des Verfahrens nach einem der Ansprüche 1 bis 3, gekennzeichnet durch
(a) eine Einspannvorrichtung für eine Probe des zu prüfenden Materials, die so beschaffen ist, daß die Probe im wesentlichen nicht schwingen kann;
(b) einen Lautsprecher zur Beschallung, und ein Mikrofon zur Schallpegelmessung, die in zwei sich gegenüberliegende Gehäuse eingebaut sind, wobei die Probe zwischen den Gehäusen eingespannt werden kann;
(c) einen am Lautsprecher angeschlossenen Tongenerator zum Erzeugen einer Frequenz zwischen 20 und 8000 Hz
(d) eine Auswerteeinrichtung zur Bestimmung der Luftdurchlässigkeit der Probe aus dem gemessenen Schallpegel.

6. Vorrichtung nach einem der Ansprüche 4 und 5, dadurch gekennzeichnet, daß die Membrane (8) des Lautsprechers (9) luftdicht ist.

7. Vorrichtung nach einem der Ansprüche 4 bis 6, dadurch gekennzeichnet, daß die Gehäuse (6, 7) mit einer Abdeckung (16) aus einem luftdurchlässigen Material, an dem die Probe (2) anliegt, abgedeckt sind.

8. Vorrichtung nach einem der Ansprüche 4 bis 7, dadurch gekennzeichnet, daß die Abdeckung (16) ein gespanntes Sieb (3) ist.

9. Vorrichtung nach einem der Ansprüche 4 bis 7, dadurch gekennzeichnet, daß die Abdeckung (16) ein Lochblech (12) ist.

10. Vorrichtung nach einem der Ansprüche 4 bis 9, dadurch gekennzeichnet, daß das Lochblech (12) Bohrungen (13) mit einem Durchmesser von 1 bis 10 mm aufweist.

11. Vorrichtung nach einem der Ansprüche 4 bis 10, dadurch gekennzeichnet, daß das Lochblech (12) Bohrungen (13) mit einem Duirchmesser von 3 bis 7 mm aufweist.

12. Vorrichtung nach einem der Ansprüche 4 bis 7, dadurch gekennzeichnet, daß die Abdeckung (16) ein Schlitzblech (14) ist.

13. Vorrichtung nach einem der Ansprüche 4 bis 7 und 12, dadurch gekennzeichnet, daß die Breite der Schlitze (15) 1 bis 4 mm beträgt.

14. Vorrichtung nach einem der Ansprüche 4 bis 13, dadurch gekennzeichnet, daß die Abdeckung (16) eine freie Fläche, die dem Luftdurchgang durch die Probe (2) dient, in Form von Bohrungen (13), Schlitzen (14) oder Maschen (4) aufweist, die insgesamt 5 bis 95 % der Prüffläche (2) beträgt.

15. Vorrichtung nach einem der Ansprüche 4 bis 14, dadurch gekennzeichnet, daß die Öffnungen (13, 14, 4) in den sich gegenüberliegenden Abdeckungen (16) fluchten.

## Claims

1. Procedure for measuring the air permeability of tape-shaped materials, characterised by the fact that
(a) a sample of the material to be measured is mounted in such a way that it basically can not swing;
(b) a sample is exposed on one side to a acoustic irradiation of 20 and 8000 Hz;
(c) the sound level issuing on the opposite side is captured
(d) air permeability of the sample is determined by the sound level.

2. Procedure for claim 1 is characterised by the fact that acoustic irradiation is effected at a frequency between 20 and 400 Hz.

3. Procedure in accordance with claim 1 or 2 is characterised by the fact that the sample is maintained in a single plane.

4. Device for the implementation of the procedure in accordance to one of the claims 1 to 3 is characterised by
(a) a mounting device for a sample of the material to be tested which is structured in such a way that the sample basically can not swing;
(b) two basically identically construed loudspeakers, the first of which is reserved for the acoustic irradiation and the second for sound level measuring and which are integrated in two opposite cases in such a way that the respective membranes face each other and the sample can be placed between the cases;
(c) a radio frequency oscillator for the generation of a frequency between 20 and 8000 Hz;
(d) an evaluation unit for the determination of the air permeability of the sample from the sound level measured.

5. Device for the implementation of the procedure in accordance to claim 1, claim 2 or claim 3, characterised by
(a) a mounting device for a sample of the material to be tested which is structured in such a way that the sample basically can not swing;
(b) a loudspeaker for the acoustic irradiation and a microphone for sound level measuring which are integrated in two opposite cases between which the sample can be mounted;
(c) a radio frequency oscillator connected to the loudspeaker for the generation of a frequency between 20 and 8000 Hz;
(d) an evaluation unit for the determination of the air permeability of the sample from the sound level measured.

6. Device in accordance with claim 4 or claim 5 which is characterised by the fact that the membrane (8) of the loudspeaker (9) is air-tight.

7. Device in accordance with one of the claims 4 to 6 which is characterised by the fact the the cases (6, 7) are covered by a cover made of air-permeable material against which the sample (2) rests.

8. Device in accordance with one of the claims 4 to 7 which is characterised by the fact that the cover (16) is a mounted sieve (3).

9. Device in accordance with one of the claims 4 to 7 which is characterised by the fact that the cover (16) is a perforated plate (12).

10. Device in accordance with one of the claims 4 to 9 which is characterised by the fact that the perforated plate (12) has bore holes (13) with a diameter of 1 to 10 mm.

11. Device in accordance with one of the claims 4 to 10 which is characterised by the fact that the perforated plate (12) has bore holes (13) with a diameter of 3 to 7 mm.

12. Device in accordance with one of the claims 4 to 7 which is characterised by the fact that the cover (16) is a slotted plate (14).

13. Device in accordance with one of the claims 4 to 7 and 12 which is characterised by the fact that the width of the slots (15) is 1 to 4 mm.

14. Device in accordance with one of the claims 4 to 13 which is characterised by the fact that the cover (16) has an open space which serves for the air flow through the sample (2) in the form of bore holes (13), slots (14) or meshes (4) which, in total, covers 5 to 95 % of the entire test area (2).

15. Device in accordance with one of the claims 4 to 14 which is characterised by the fact that the openings (13, 14, 4) are in alignment with the opposite covers (16).

## Revendications

1. Revendication visant le mesurage de la perméabilité à l'air sur matériaux sous forme de bande , caractérisés de manière à ce
(a) qu'une éprouvette du matériaux à mesurer soit serrée de façon à éviter toute oscillation.
(b)que l'éprouvette soit exposée, d'un côté, à une sonorisation atteignant entre 20 et 8000 Hz;
(c)que le niveau sonore sortant du le côté opposé soit capté;
(d)que soit déterminé à partir du niveau sonore la perméabilité a l'air de l'éprouvette.

2. Procédure selon la revendication 1, caractérisée en ceci que la sonorisation se féra en appliquant une fréquence variant entre 20 et 400 Hz.

3. Procédure selon une des revendications 1 et 2, caractérisée en ceci que l'éprouvette soit maintenue en position plane.

4. Dispositif permettant l'exécution de la procédure selon une des revendications 1 à 3, caractérisé en ceci
(a) qu'un dispositif de fixation de l'éprouvette du matériau soit façonné de manière à ce que l'éprouvette, dans l'essentiel, soit empêchée d'osciller;
(b) que soient prévus essentiellement deux haut-parleurs à construction identique dont le premier assure la sonorisation et le deuxième le mesurage du niveau sonore, les deux étant encastrés dans des boîtiers opposés l'un à l'autre, de manière à ce que les membranes respectives s'affrontent et que l'éprouvette puisse être disposée entre les boîtiers;
(c)qu' un générateur sonore soit rattaché au premier haut-parleur produisant une fréquence variant entre 20 et 8000 Hz;
(d)que soit prévue une unité d'évaluation afin de déterminer la perméabilité à l'air de l'éprouvette dont le niveau sonore vient d'être mesuré.

5. Dispositif permettant l'exécution de la procédure selon un des revendications de 1 à 3 caractérisé en ceci
(a) qu'un dispositif de fixation de l'éprouvette du matériaux à examiner soit façonné en sorte que l'éprouvette, dans l'essentiel, soit empêché d'osciller;
(b) que soient incorporés un haut-parleur assurant la sonorisation et un micro mesurant le niveau sonore, dans deux boîtiers s'affrontant mutuellement; l'éprouvette pouvant être serrée entre les boîtiers;
(c) qu' un générateur sonore soit rattaché à l'haut-parleur produisant une fréquence variant entre 20 et 8000 Hz;
(d) que soit prévue une unité d'évaluation déterminant la perméabilité à l'air de l'éprouvette dont le niveau sonore vient d'être mesuré.

6. Dispositif selon une des revendications 4 et 5, caractérisé en ceci que la membrane (8) du haut-parleur (9) soit étanche à l'air.

7. Dispositif selon une des revendications 4 à 6, caractérisé en ceci que les boîtiers (6,7) soient fermés au moyen d'une couverture (16) fabriquée en matériel perméable à l'air et adjacente de l'éprouvette (2).

8. Dispositif selon une des revendications 4 à 7, caractérisé en ceci que la couverture (16) soit un tamis tendu (3).

9. Dispositif selon une des revendications 4 à 7, caractérisé en ceci que la couverture (16) soit une tôle perforée (12).

10. Dispositif selon une des revendications 4 à 9, caractérisé en ceci que la tôle perforée fasse apparaître des perforations (13) ayant un diamètre variant entre 1 et 10 mm.

11. Dispositif selon une des revendicaions 4 à 10, caractérisé en ceci que la tôle perforée (12) fasse apparaître des perforations (13) ayant un diamètre variant entre 3 et 7 mm.

12. Dispositif selon une des revendications 4 à 7, caractérisé en ceci que la couveture (16) soit une tôle entaillée (14).

13. Dispositif selon une des revendications 4 à 7 et 12, caractérisé en ceci que la largeur des entailles (15) varie entre 1 et 4 mm.

14. Dispositif selon une des revendications 4 à 13, caractérisé en ceci que la courverture (16) soit une surface libre servant de passage à l'air à travers l'épouvette (2), sous forme de perforations (13), entailles (14) ou mailles (4), s'additionnant, au total, à 5 à 95% de la surface examinée (2).

15. Dispositif selon une des revendications 4 à 14, caractérisé en ceci que les ouvertures (13,14,4) s'alignent sur les couvertures (16) opposées.
